# EUROPEAN PATENT APPLICATION

(11) **EP 1 455 088 A1**
(43) Date of publication of application: **08.09.2004**
(21) Application number: 02785432.2
(22) Date of filing: 02.11.2002
(51) Int. Cl.: F03D 11/00, B66F 11/04, E04G 3/10

(54) **SCAFFOLD FOR AEROGENERATORS HAVING A SHAFT WITH A VARIABLE SECTION**

(30) Priority: 02.11.2001 ES 200102444
(71) Applicant: Benedicto Soler, Blanca, 15701 Santiago de Compostela (ES)
(72) Inventor: Benedicto Soler, Blanca, 15701 Santiago de Compostela (ES)
(74) Representative: Carvajal y Urquijo, Isabel
(86) International application number: PCT/ES2002/000510
(87) International publication number: WO 2003/038277

(57) **Abstract**

The invention relates to a scaffold for aerogenerators having a shaft (3) with a variable section. The inventive scaffold can be used easily to access the shaft, blades and frame of the aerogenerator. Said scaffold comprises a fixed platform (1) and retractable steps (2) which are adjusted to the diameter of the shaft using the corresponding control panel. In this way, the work surface area is increased, access to all parts of the aerogenerator (shaft, blades and frame) is facilitated and greater stability is afforded. Both the fixed platform and the steps are provided with corresponding guard-rails (4), the rails for the steps being retractable. The platform is suspended from the nacelle of the aerogenerator using cables at points which are symmetrical to the axis of the shaft. The scaffold is provided with two stabilizing beams which are used to maintain the verticality of the cables and to increase the stability of the platform.

## Description

In the latest years renewable energy and, especially wind energy, is growing considerably.

It has been proved that there is a decrease in electricity output in the different wind farms with the course of time, which is associated with the aging of the installed turbines. This aging is due to the wearing turbines undergo and it is mainly caused by the severe rain and wind conditions they are exposed to.

Dirt deposits in wind generators are one of the factors, apart from aesthetic damage, contributing to increase the number of failures and breakdowns. On the other hand, in the nacelle of the wind generator blades, it leads to an output loss apart from the appearance of vibration and overstress.

Therefore, it is appropriate to clean wind generators in wind farms, as well as regularly repair the possible wearing in the tower steel and in the glass fiber in the nacelle and generator blades, which are damaged by weathering.

The main difficulty for maintenance work is the inaccessibility due to the characteristic size and shape of wind generators, and the impossibility of disassembling them.

At present, maintenance work is being carried out with expensive crane hoists or by specialized climbers. There are some inventions of scaffolds for wind generators, but they do not allow having access to all the wind generator parts. That is the reason why the interest of the herein invention is justified, since it enables an easy accessibility to the tower, the blades or the nacelle, and it does not require specially qualified staff.

The invention consists of a scaffold for aerogenerators having a shaft with a variable section, which enables an easy access to the tower, the blades and the nacelle of the turbine.

It is formed by a fixed platform (1), and some concealable steps (2) which adapt to the tower diameter (3) by means of the appropriate control panel. Thus, the operating area is increased and access to all parts of the wind generator is made easier, such as tower, blades and nacelle. It also provides the platform with greater stability.

Both the fixed platform (1) and the steps (2) are provided with the appropriate inside and outside rails (4), which can be extended in the steps, so as to adapt to the step size under all situations.

The platform is suspended from the turbine nacelle with cables in symmetrical points to the tower shaft. In order to ensure the cable verticality and to provide the platform with greater stability, there are two stabilizing frames.

The suspension system, unlike the one other inventions present anchored in two of the blades, does not require the scaffold to be disassembled whenever you need to access to a new blade.

Considering the scaffold size, it can be disassembled to make transportation easier.

The operating process to access a new blade involves turning blades till the desired one is placed in parallel position to the tower, with the scaffold located at tower height than blades. At this point the scaffold is hoisted to the desired height.

In order to make this report easily understandable, we attach some figures showing the different parts that make up the scaffold.

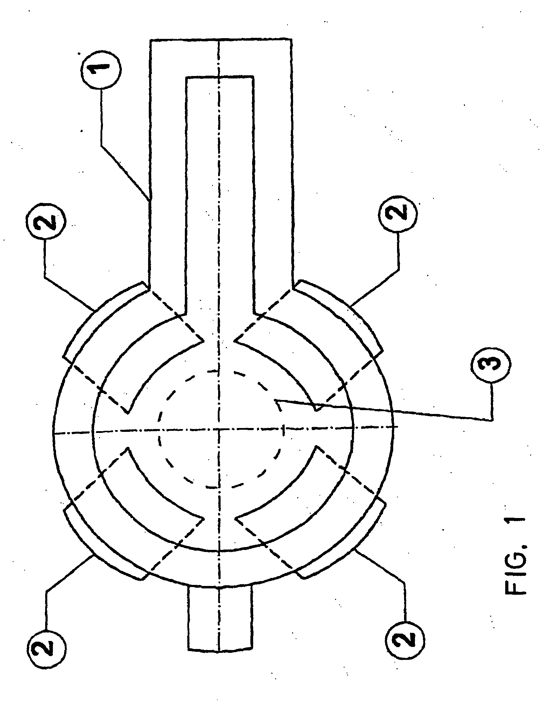

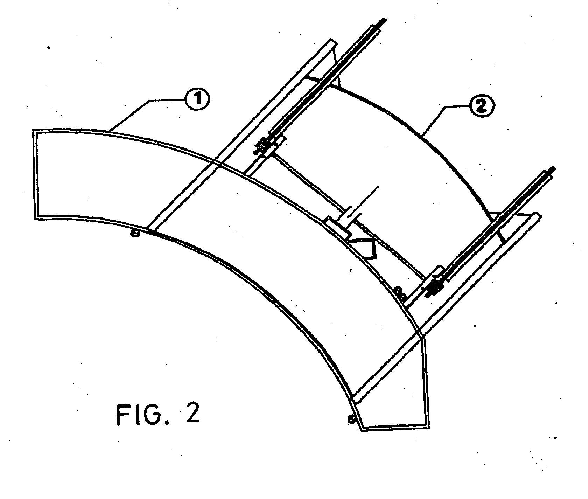

In figure 1 a plan view diagram of the scaffold is shown. We can observe the shape of the main platform (1) an that of the steps (2) and its position regarding the wind generator tower (3). Figure 2 shows a close view of the concealable step (2) in the platform.

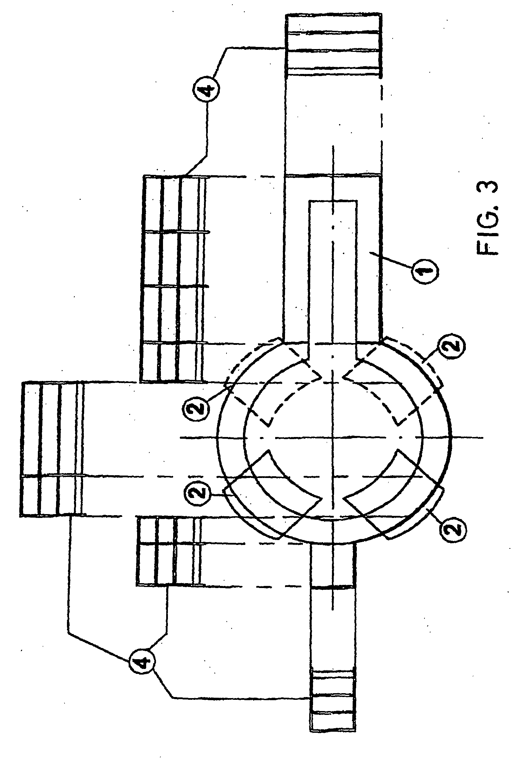

Figure 3 shows a close view of the platform rail. We should emphasize that inside an outside rails are identical.

## Claims

1. Scaffold for aerogenerators having a shaft with a.variable section formed by a fixed platform and concealable steps. As compared to other inventions, its **characterized by** enabling access to the whole outside perimeter of the tower, blades and nacelle. It has radial steps which adapt to the tower since they are operated from the appropriate control panel. Thus, greater stability is achieved in the scaffold and the operating area is increased, since steps, the same as the scaffold, are provided with rails. But these are extensible rails instead of fixed ones in order to adapt to the step size under any situation.

2. Scaffold for aerogenerators having a shaft with a variable section according to claim 1, **characterized by** being suspended with cables from the nacelle in points symmetrically located to the tower in order to prevent platform unbalance.

3. Scaffold for aerogenerators having a shaft with a variable section according to claim 1, **characterized by** having two stabilising frames, which, in turn, act as guide to keep the cables vertically.

4. Scaffold for aerogenerators having a shaft with a variable section according to claim 1, **characterized by** the possibility of disassembling it to make transportation easier.
